# EUROPEAN PATENT SPECIFICATION

(11) **EP 4 473 955 B1**
(45) Date of publication and mention of the grant of the patent: **04.03.2026**
(21) Application number: 24209265.8
(22) Date of filing: 19.06.2020
(51) Int. Cl.: A61C 7/08, A61K 6/15, A61K 6/30

(54) **ELASTICALLY MODIFIABLE ORTHODONTIC APPLIANCES AND METHOD OF REDUCING ITS FLEXURAL MODULUS**
ELASTISCH MODIFIZIERBARE ORTHODONTISCHE VORRICHTUNGEN UND VERFAHREN ZUR REDUZIERUNG IHRES BIEGEMODULS
APPAREILS ORTHODONTIQUES MODIFIABLES ÉLASTIQUEMENT ET PROCÉDÉ DE RÉDUCTION DE LEUR MODULE DE FLEXION

(30) Priority: 19.06.2019 US 201962863770 P
(43) Date of publication of application: 11.12.2024
(62) Divisional of application: 20826342.6
(73) Proprietor: Smylio Inc., Fremont, CA 94538 (US)
(72) Inventor: Phan, Loc, Santa Clara (US)
(74) Representative: WBH Wachenhausen Patentanwälte PartG mbB

(56) References cited:
- WO-A1-2018/222864
- WO-A2-2009/118601
- US-A1- 2013 302 742
- US-A1- 2017 007 364

## Description

### FIELD OF THE INVENTION

The subject matter of the present disclosure relates generally to the field of orthodontic devices. More particularly, the present disclosure relates to user removable orthodontic devices.

### BACKGROUND

An objective of orthodontics is to move a patient's teeth to positions where function and/or aesthetics are optimized. Traditionally, appliances such as braces are applied to a patient's teeth by a treating practitioner and the set of braces exerts continual force on the teeth and gradually urges them toward their intended positions. Over time and with a series of clinical visits and reactive adjustments to the braces by the practitioner, the appliances to move the teeth toward their final destination.

More recently, alternatives to conventional orthodontic treatment with traditional affixed appliances (e.g., braces) have become available. For example, systems including a series of molded plastic aligners have become commercially available from Align Technology, Inc., San Jose, Calif., under the trade name Invisalign^{®} System. The Invisalign^{®} System is described in numerous patents and patent applications assigned to Align Technology, Inc. including, for example in U.S. Pat. Nos. 6,450,807, and 5,975,893. WO 2018/222864 relates to dental appliances and polymeric sheets.

The Invisalign^{®} System typically includes designing and fabricating multiple aligners to be worn by the patient before the aligners are administered to the patient and used to reposition the teeth (e.g., at the outset of treatment). Often, designing and planning a customized treatment for a patient makes use of computer-based 3-dimensional planning/design tools. The design of the aligners relies on computer modeling of the patient's teeth in a series of planned successive tooth arrangements, and the individual aligners are designed to be worn over the teeth, such that each aligner exerts force on the teeth and elastically repositions the teeth to each of the planned tooth arrangements.

Arguably, such aligners are less noticeable than traditional braces because typically aligners are constructed from a transparent material, however, many believe that aligners are easily noticeable due to the glossy sheen of the transparent material. Like traditional braces, aligners are required to be worn nearly constantly (20-22 hours a day), with breaks allowed for eating and cleaning teeth. Only small breaks are allowed because aligners do not have enough flexibility to account for teeth drifting out of alignment, which based on physical and material characteristics of the aligner. Increasing the working tolerance to account for higher drift requires increasing the working elasticity of an aligner, *i.e.,* the amount an aligner can stretch to mount to teeth without causing permanent deformation, but a highly elastic aligner typically will not provide enough force to move teeth required for orthodontic treatment. Issues like these contribute to failed results or require restart of treatments because patients fail to wear the aligners according to prescribed requirements.

### SUMMARY OF THE INVENTION

The invention is as defined in the appended claims.

Embodiments of the invention relate to orthodontic appliances and methods of use as summarized in the following paragraphs.

Some embodiments relate to orthodontic appliances in which can be flexural modified by exposure to one or more environmental conditions.

Some embodiments are related to an orthodontic appliance. The orthodontic appliance can have a working flexural modulus configured to therapeutically move teeth. The orthodontic appliance can include a material that is configured to cause the orthodontic appliance to have a transitory flexural modulus that is reduced from the working flexural modulus when the material is exposed to an environmental condition.

Some embodiments are related to an orthodontic appliance that can have shells shaped to receive teeth. The shells can be stacked and include at least one of an anchoring shell and a mutable shell. The mutable shell can be configured to significantly decrease in elastic modulus by exposure to an environmental condition. The anchoring shell can be configured to not significantly decrease in elastic modulus by exposure to the environmental condition.

Some embodiments are related to an orthodontic appliance that can have shells shaped to receive teeth. The shells can be stacked and include at least one of an anchoring shell and a mutable shell. The mutable shell can be configured to plastically soften when heating the shells, and wherein the anchoring shell is configured to remold the mutable shell into a pre-softened state after heating the shells ceases.

Some embodiments are related to an orthodontic appliance that can have shells shaped to receive teeth. The shells can be stacked and include at least one of an anchoring shell and a mutable shell. The mutable shell can be configured to significantly increase in flexibility from exposure to an environmental condition. The anchoring shell can be configured to provide structural form to the mutable shell after cessation of the effect.

Some embodiments relate to an orthodontic appliance having an anchor shell, which can be formed from a first polymer material with a first glass transition temperature. The orthodontic appliance can include a mutable shell shaped to stack with the anchor shell. The second shell can be formed from a second polymer material with a second glass transition temperature. The second polymer material can transition to a substantially liquid state at a temperature where the first polymer material remains in a substantially solid state.

In some embodiments, the first polymer material comprises a polycarbonate material, and the second polymer material comprises a polyurethane material.

Some embodiments relate to a method where one of the any of the above orthodontic appliances is obtained and exposed to the environmental condition to reduce the flexural modulus of the orthodontic appliance.

In some embodiments, the environmental condition warming the orthodontic appliance. In some embodiments, the appliance is warmed to a temperature between 60 and 100 °C.

In some embodiments, surfaces of the orthodontic appliance can be cooled after heating to a temperature less than 45°C to prevent burns.

### BRIEF DESCRIPTION OF THE DRAWINGS

For a better understanding of at least certain embodiments, reference will be made to the following Detailed Description, which is to be read in conjunction with the accompanying drawings.
**FIG. 1** is a perspective view of a jaw and an orthodontic appliance, according to some embodiments.
**FIG. 2** is an exploded view of an orthodontic appliance, according to some embodiments.
**FIG. 3** is a connection schematic for an orthodontic appliance, according to some embodiments.
**FIGS. 4A-4C** are graphs showing physical properties of various orthodontic appliance materials, according to some embodiments.
**FIG. 5** is a perspective view of a process for molding an orthodontic appliance, according to some embodiments.

The figures depict various embodiments of the present invention for purposes of illustration only, wherein the figures use like reference numerals to identify like elements. One skilled in the art will readily recognize from the following discussion that alternative embodiments of the structures and methods illustrated in the figures may be employed without departing from the principles of the invention described herein.

### DETAILED DESCRIPTION

Embodiments are disclosed that relate to orthodontic appliances constructed from multiple shells for the purpose of maximizing working elasticity, which is defined herein as the capability of an orthodontic appliance to elastically deform to attach to an initial location of the teeth. This flexibility can allow an orthodontic appliance to obtain a greater range of initial tooth arranging (i.e., flexing) positions that differ from the appliance's target tooth arranging (i.e., resting) position. Possible benefits include greater break time (e.g., 8-12 hours) between required wear periods and greater latitude for patient non-adherence to required wear-times, and hence increased efficacy. This flexibility can be temporarily increased by exposing the orthodontic appliances to one or more environmental conditions, such as heat.

Before the present invention is described in greater detail, it is to be understood that this invention is not limited to particular embodiments described, as such can, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges can independently be included in the smaller ranges and are also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which can be readily separated from or combined with the features of any of the other several embodiments without departing from the scope of the present invention. Any recited method can be carried out in the order of events recited or in any other order that is logically possible.

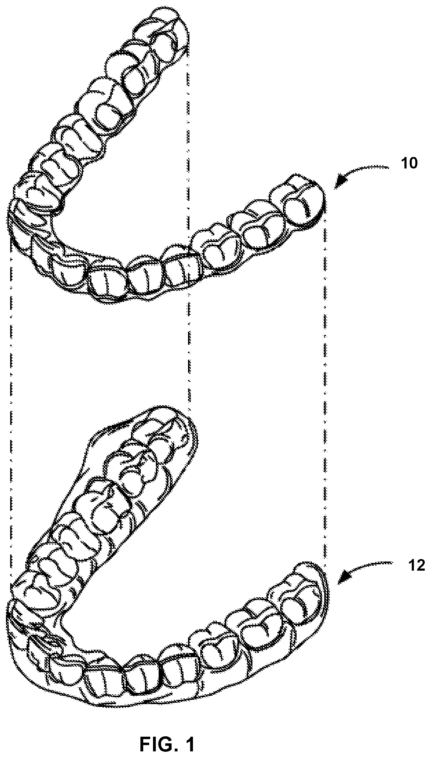

FIG. 1 provides an appropriate starting point in a detailed discussion of various embodiments of the present invention with respect to tooth repositioning appliances designed to apply repositioning forces to teeth. An orthodontic appliance 10 can be worn by a patient in order to achieve an incremental repositioning of individual teeth in the jaw 12. The orthodontic appliance 10 can include a shell having teeth-receiving cavities that receive and resiliently reposition the teeth. In some embodiments, a polymeric appliance can be formed from a sheet of suitable layers of polymeric material. An appliance can fit over all teeth present in an upper or lower jaw, or less than all of the teeth.

In some embodiments, only certain teeth received by an appliance will be repositioned by the appliance while other teeth can provide a base or anchor region for holding the appliance in place as it applies force against the tooth or teeth targeted for repositioning. In some cases, many or most, and even all, of the teeth will be repositioned at some point during treatment. Teeth that are moved can also serve as a base or anchor for holding the appliance as it is worn by the patient. Typically, no wires or other means will be provided for holding an appliance in place over the teeth. In some cases, however, it may be desirable or necessary to provide individual anchors on teeth with corresponding receptacles or apertures in the appliance so that the appliance can apply a selected force on the tooth. Basic methods for determining an orthodontic treatment plan using a series of incremented appliances as well as instructions for molding orthodontic appliances, are described in U.S. Pat. Nos. 6,450,807, and 5,975,893.

An appliance can be designed and/or provided as part of a set of a plurality of appliances. In such an embodiment, each appliance may be configured so a tooth-receiving cavity has a geometry corresponding to an intermediate or final tooth arrangement intended for the appliance. The patient's teeth can be progressively repositioned from an initial tooth arrangement to a target tooth arrangement by placing a series of incremental position adjustment appliances over the patient's teeth. A target tooth arrangement can be a planned final tooth arrangement selected for the patient's teeth at the end of all planned orthodontic treatment. Alternatively, a target arrangement can be one of many intermediate arrangements for the patient's teeth during the course of orthodontic treatment. As such, it is understood that a target tooth arrangement can be any planned resulting arrangement for the patient's teeth that follows one or more incremental repositioning stages. Likewise, an initial tooth arrangement can be any initial arrangement for the patient's teeth that is followed by one or more incremental repositioning stages.

The orthodontic appliances can be generated all at the same stage or in sets or batches, e.g., at the beginning of a stage of the treatment, and the patient wears each appliance until the pressure of each appliance on the teeth can no longer be felt or has resulted in the maximum amount of expressed tooth movement for that given stage. A plurality of different appliances (e.g., set) can be designed and even fabricated prior to the patient wearing any appliance of the plurality. After wearing an appliance for an appropriate period of time, the patient replaces the current appliance with the next appliance in the series until no more appliances remain. The orthodontic appliances are generally not affixed to the teeth and the patient may place and replace the appliances at any time during the procedure (e.g., patient-removable appliances).

The final orthodontic appliance or several appliances in the series may have a geometry or geometries selected to overcorrect the tooth arrangement, i.e., have a geometry which would (if fully achieved) move individual teeth beyond the tooth arrangement which has been selected as the "final." Such over-correction may be desirable in order to offset potential relapse after the repositioning method has been terminated, *i.e.,* to permit movement of individual teeth back toward their pre-corrected positions. Over-correction may also be beneficial to speed the rate of correction, *i.e.,* by having an appliance with a geometry that is positioned beyond a desired intermediate or final position, the individual teeth will be shifted toward the position at a greater rate. In such cases, the use of an appliance can be terminated before the teeth reach the positions defined by the appliance.

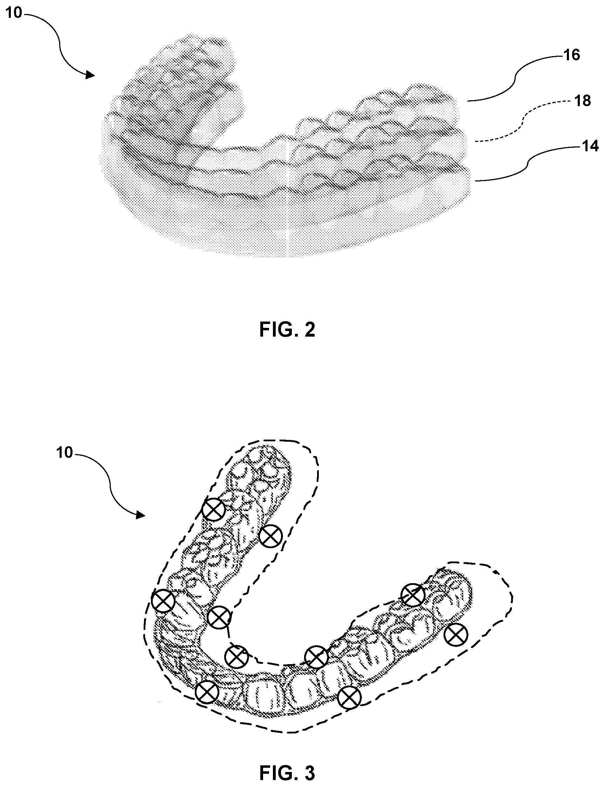

FIG. 2 shows an exploded view of an example of the orthodontic appliance 10. The orthodontic appliance 10 can include a first shell 14 having a teeth engaging surface and an opposite upper surface. The orthodontic appliance 10 can also include a second shell 16 having a lower-shell engaging surface and an opposite upper surface that is exposed to the mouth. Optionally, one or more additional shells 18 can be located between the first shell 14 and the second shell 16. In some embodiments, the more shells that are used, the greater the working elasticity of the orthodontic appliance 10.

While the orthodontic appliance 10 is shown in an exploded view for the purpose of better understanding, in some embodiments, the shells are layers of a laminate material, i.e., the shells are bound to one another during formation (e.g., extrusion) of the laminate material.

In some embodiments, the shells of the orthodontic appliance 10 are intended to be mechanically engaged with one another in a stack. "Mechanically engaged" is defined herein as the substantially non-affixed or varyingly affixed engagement between one or more shells to approximate the strength of a single shell appliance of approximately the same thickness as the stacked shells. Mechanical engagement can be obtained by stacking the shells while having the lower-shell engaging surface of the second shell largely conforming to the upper surface of the first shell. In some embodiments, shells can be stacked loosely, i.e., without a compressive or an interference fit between shells or such that an upturned stack of shells self-disassembles, before being made substantially non-affixed or varyingly affixed. The shells are substantially non-affixed (or varyingly affixed) because a substantial amount of surface areas between the shells are not bonded or otherwise made inseparable through some process, with the remaining surfaces being affixed. In some embodiments, substantially non-affixed or varyingly affixed shells have less than 1-2 %, 1-5 %, 1-10 %, 1-20 %, 1-40 %, 1-60 %, or 1-80 % of the combined contacting surfaces of the shells affixed. The area of non-fixation can be limited according to the needs of the appliance, hence, in some embodiments, a majority the surface areas of the appliance are affixed, while the remaining part is non-affixed because only the latter requires high working elasticity.

In some embodiments, the lack of substantial fixation between shells provides greater working elasticity to the orthodontic appliance 10 because the teeth-engaging shell can flex more due to being thinner while the outer shells are allowed to flex in multiple directions away from the teeth-engaging shell. In some embodiments, this can result in partial mechanical disengagement between some of the engaging surfaces of the shells, however the disengagement is not enough to significantly impair flexural modulus of the device required for aligning the teeth to the target position.

FIG. 3 shows a schematic for affixing the shells of the orthodontic appliance 10 at discrete locations. Each encircled "X" represents a possible point of fixation between the shells. Alternatively, as shown by the dashed line, the edges of each shell can serve as a continuous or non-continuous area of fixation. Generally, the more fixation provided, the less working elasticity the orthodontic appliance 10 will have. Points of fixation can be determined based on the amount of working elasticity required, which teeth are being moved, and which teeth are serving as anchors. Alternatively, the shells can be uniformly and weakly bonded with a highly elastic material of low cohesive strength that allows for a large amount of stretching and/or shearing. Such embodiments are substantially non-affixed or varyingly affixed because the working flexibility of such an orthodontic appliance are maintained due to the properties of the weak bond.

In some embodiments, the shells can have thicknesses ranging from 0.00254 - 0.0381 cm (0.001 - 0.015 inches) thick, and can be constructed from a polyester, a co-polyester, a polycarbonate, a polyurethane (PU), a thermoplastic polyurethane (TPU), a polypropylene, a polyethylene, a polypropylene and polyethylene copolymer, an acrylic, a cyclic block copolymer, a polyetheretherketone, a polyamide, a polyethylene terephthalate, a polybutylene terephthalate, a polyetherimide, a polyethersulfone, a polytrimethylene terephthalate or a combination thereof. In some embodiments, shells are coated with lubricous materials or provided with surface treatments to decrease friction between the shells. In some embodiments, interior portions of the shells are treated with hydrophobic coatings to prevent liquid intrusion into the shells. In some embodiments, shells of relatively more flexibility can be used in conjunction with stiffer shells. Flexible shells can be constructed from hydrogels, styrenic block copolymers (SBC), silicone rubbers, elastomeric alloys, thermoplastic elastomers (TPE), thermoplastic vulcanizate (TPV) elastomers, polyurethane elastomers, block copolymer elastomers, polyolefin blend elastomers, thermoplastic co-polyester elastomers, thermoplastic polyamide elastomers, or a combination thereof. Flexible shells may also provide the benefit of a gasket to prevent liquid intrusion between the shells.

In some embodiments, shells of an orthodontic appliance can be formed from materials to provide an elastic modulus decrease of one or more aspects of the appliance, which can decrease the flexural modulus for the appliance as a whole. When the orthodontic appliance is used within the patient's mouth, the orthodontic appliance will have a working flexural modulus sufficient to operate as an aligner, i.e., therapeutically move teeth, however when the orthodontic appliance is exposed to a specific environmental condition, e.g., a physical, chemical, or biological stimulus, or a combination of environmental conditions, one or more portions of the appliance can respond with a temporary or permanent physical change, such as an increase in elasticity, which results in the orthodontic appliance having a transitory flexural modulus. Some of these environmental conditions can include increased/decreased energy exposure (e.g., via temperature change, electromagnetic wave exposure (e.g. UV, infrared), magnetization, electrical current and/or voltage application), chemical exposure (e.g., via pH increase/decrease, reduction-oxidation reaction, solvent exposure), and/or reaction with biological agents (e.g., exposure to glucose, exposure to enzymes).

The transitory flexural modulus can be reduced from the working flexural modulus, for example, a 2-15% reduction in flexural modulus can occur, and in some embodiments, reductions of 2-5%, 4-8%, 7-12%, or 11-15% can occur. Cessation of the specific environmental condition, i.e., removal and/or reversal of the stimuli can cause the orthodontic appliance to resume its prior therapeutic, tooth-aligning form, having the working flexural modulus.

To provide a memory effect after cessation of the environmental condition, an orthodontic appliance can include one or more anchor shells, in addition to one or more mutable shells. A mutable shell can be configured to react to the environmental condition, while an anchor shell can be configured to not react (or react in a very small degree) to the environmental condition. In this manner, the anchor shell can provide the mutable shell with a memory mold in cases where the mutable shell loses its own shape memory, for example when the anchor shell is heated to a glass transition temperature or exposed to a reactive solvent or biological agent. Put another way, the anchor shell provides the mold for remolding the mutable shell as the mutable shell reverts to an elastic state.

In some embodiments, the anchor shell is constructed entirely or largely of a material that does not substantially react to the triggering environmental condition. For example, the anchor shell can be formed from a polycarbonate, which is resistant to many solvents and biological agents, and has a glass transition temperature of approximately 150°C, and can start softening at approximately 90°C. In comparison, the mutable shell can be formed from a polymer having disparate reactive qualities.

For example, the mutable shell can be formed from a polymer material having a significantly lower glass transition temperature and onset softening temperature, with one or both being less than 90°C. Accordingly, when the mutable shell is exposed to a temperature less than 90 °C and at least its onset softening temperature, then the flexural modulus of the orthodontic appliance will decrease due to the softening of the mutable shell.

The user (e.g. patient or caregiver) applies heat to an appliance having at least one mutable shell and at least one anchoring shell, for example using hot (e.g. 60-100 °C) water, a hair dryer, microwave oven, or other common household heating implements, to cause a state change so as to soften the mutable shell. The user also briefly cools the outer surfaces of the appliance (e.g. using running tap water or ice water plunge) to prevent burns (e.g., such that the surface is less than 45 °C) while retaining enough heat within the mutable shell to provide the desired effect. The user can then apply the appliance to the teeth while the mutable shell is in a rubber-like state. At this point, most or all of the force applied to the teeth is performed by the anchoring shell, and such force may not be enough to cause the desired orthodontic therapy. After some time in the oral cavity, the mutable shell will gradually cool to a harder state and concurrently increase the force applied to the teeth in conjunction with the anchoring shell in order to cause the level of force required for orthodontic therapy. Because the force is applied gradually, pain caused by the appliance may be lessened, at least initially until the patient becomes experienced with wearing the appliance, and therefore may improve wear compliance.

The mutable shell is formed from a thermoplastic polyurethane (TPU), for example, ISOPLAST 2530, which has a glass transition temperature of approximately 77°C, and can start softening at approximately 40 °C. In one example, an orthodontic appliance is formed from a TPU mutable shell and a polycarbonate anchoring shell. In another example, an orthodontic appliance is formed from a TPU mutable shell and a polyurethane anchoring shell.

The orthodontic appliance includes a mutable shell and anchoring shells, where the mutable shell is located between two or more anchoring shells. This arrangement can be advantageous in a heating method where the appliance is brought to a suitable transition temperature to affect the mutable shell but to avoid burns requires some amount of cooling (e.g., using cold tap or ice water) before placing the appliance in the oral cavity. Accordingly, in such an arrangement, the anchoring shells can be be cooled to a safe temperature while providing insulation in order to retain heat within the mutable shell.

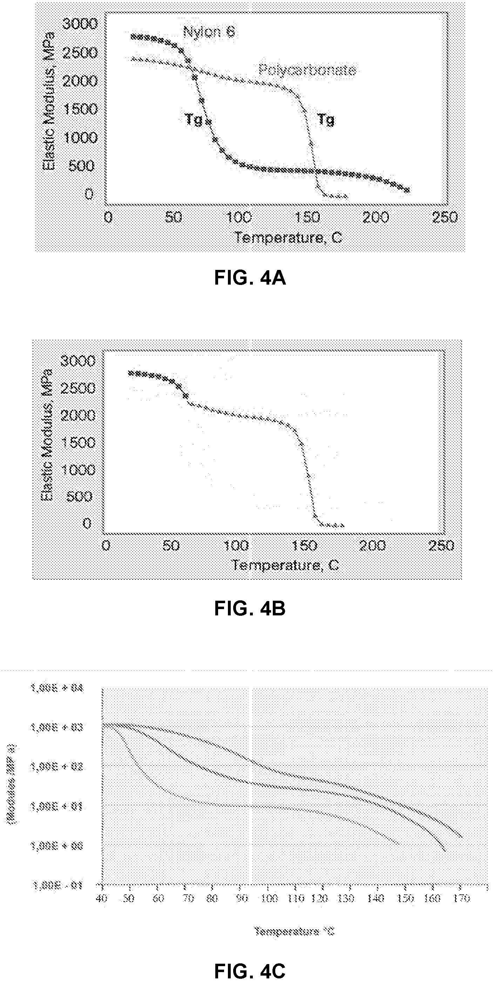

FIG. 4A shows a graph of dynamic mechanical analysis data (elastic modulus vs temperature) for both the TPU and polycarbonate. The graph visually illustrates the disparate nature of the two materials with respect to melt temperatures, with the TPU melting well before the polycarbonate significantly softens. FIG. 4B shows a graph of dynamic mechanical analysis data (elastic modulus vs temperature) for a laminated structure of the TPU and polycarbonate. Each material provides separate effects on the physical properties of the laminate. At temperatures above 70°C, there is approximately a 25% loss in modulus.

Generally, the grades of the polymers selected for the shells will control the rate of change of the flexural modulus. The prior material example for the mutable shell softens/melts according to a second order transition, i.e., softens/melts over a broad temperature range, which is common for polymers. However, it is possible to use a first order transition material such as chain crystallizable polymer, e.g., penta decyl acrylate, which have sharp melt transitions. In some embodiments, a 10-20% by weight addition of such a first order polymer into a second order polymer could be used. Hence, when the melt temperature of the first order polymer is achieved, it could disrupt the combined structure and cause a significant drop flexural modulus. In such examples, using a single shell may be viable for an orthodontic appliance. Additive blends of different second order polymers can also be used. For example, a blend of polyurethane and nylon. FIG. 4C shows a graph of modulus vs temperature for nylon (top-most curve) and polyurethane (bottom-most curve). A blend of the materials is shown by the central curve, which illustrates how the polyurethane addition can initiate softening of the blended material at much lower temperature as compared to the nylon alone.

In some embodiments, polymers can be doped with certain materials to help cause the environmental condition. For example, if a relatively high melt temperature (e.g. 100°C) is desired for triggering the mutable shell, the polymer can be placed in boiling water, but this mode of heating can be dangerous to the patient, and waiting for the polymer to cool to a safe temperature for insertion of the appliance inside the patient's mouth may bypass the desired flexural modulus. However, doping the polymer with microwave absorbing or reflecting materials (e.g., nanoparticles or microparticles composed of metals, hydrogels, or ceramics) cause be useful for direct heating of the mutable shell without heating the entirety of the appliance. Exposing the appliance to microwaves can cause a localized heating effect due to the particles absorbing microwaves (or shedding electrons in the case of metallic particles) directly at the mutable portions, which in turn can be covered by one or more anchor shells (which can be formed from non-microwave absorbing polymers) to insulate the patient from the heated mutable shell. In this manner, use of polymer materials with relatively high melt temperatures (i.e., unsafe for direct handling) can be achieved without requiring use of unsafe heating conditions.

As discussed above, mutable shells are not limited to materials in which the specific environmental condition for triggering a modulus change is heat. For example, the colligative property of sodium chloride in water and the upper critical solution concentration of an ionic polymer, e.g., dimethyl amino ethyl acrylate (DMAEA), can be used. That is, at a certain osmolality or sodium chloride concentration the DMAEA polymer will completely reverse its polarity from being hydrophobic to hydrophilic or vice versa. In another example, a polymeric material with a light-triggered reversible crystal-liquid transition can be used.

The benefits of an orthodontic appliance having an environmentally induced transitory flexural modulus include the general benefits of a highly flexible orthodontic appliance, but to an even greater degree. Less patient pain and discomfort can occur by the patient exposing the orthodontic appliance to the particular environmental effect(s) that causes the transitory flexural modulus, for example, by soaking the orthodontic appliance in warm water before insertion or swishing warm water in the patient's mouth before removal. Hence, providing relatively easy insertion and removal and lessened initial insertion discomfort. In this manner, the orthodontic appliance can be designed to provide a higher level of attachment by accounting for the transitory flexural modulus during removal. Addressing case refinement (via stress relaxation) can also occur in the same manner, for example, by placing the orthodontic appliance in very hot water to regain its initial molded form. In cases of minor relapse, the orthodontic appliance can be used a 4-week aligner with movement for multiple stages programmed into a single appliance. This can be achieved by the patient being instructed to place the aligner in hot water for the first two weeks of treatment prior to use.

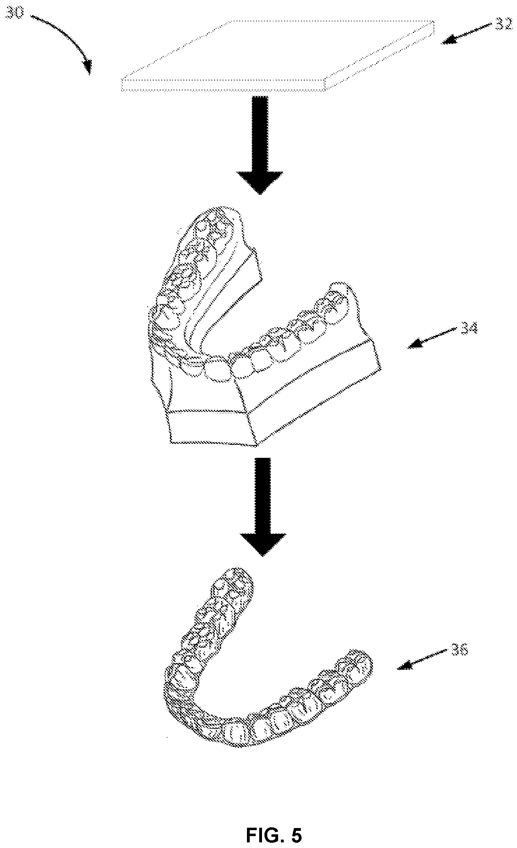

FIG. 5 depicts an example of a basic process 30 for forming an orthodontic appliance. As shown, a material 32 can be formed into an orthodontic appliance 36. The material 32 can be of one layer to form a single shell or multiple non-affixed layers of material to form multiple shells at once. In this example process, the tooth positioning appliance 36 can be produced with the use of a physical tooth model, or mold, 34. The tooth positioning appliance 36 can be produced by heating the thermoformable material 32 and then vacuum or pressure forming the material over the teeth in the physical tooth model 34. The tooth positioning appliance 36 is a direct representation of the physical tooth model.

After formation, shells can be affixed to one another according to the desired working elasticity required for the patient. Methods of fixation include chemical bonding, localized melting, fasteners, and/or localized physical deformation key the shells together. Before or after fixation takes place, excess material from the sheet can be trimmed to form a final tooth positioning appliance that can be used for orthodontic treatment of a patient. The edges of the shells can be sealed with a flexible material such as silicone to prevent liquid intrusion.

One or a series of physical tooth models, such as the model described above, may be used in the generation of elastic repositioning appliances for orthodontic treatment. Similar to the process above, each of the appliances can be generated by thermoforming a multilayer polymeric material over a mold of a desired tooth arrangement to form a dental appliance. The tooth positioning appliance of the desired tooth arrangement generally conforms to a patient's teeth but is slightly out of alignment with the initial tooth configuration. Placement of the elastic positioner over the teeth applies controlled forces in specific locations to gradually move the teeth into the desired configuration. Repetition of this process with successive appliances comprising new configurations eventually moves the teeth through a series of intermediate configurations to a final desired configuration.

Throughout the foregoing description, and for the purposes of explanation, numerous specific details are set forth in order to provide a thorough understanding of the described techniques. It will be apparent, however, to one skilled in the art that these techniques can be practiced without some of these specific details. Although various embodiments that incorporate these teachings have been shown and described in detail, those skilled in the art could readily devise many other varied embodiments or mechanisms to incorporate these techniques. Also, embodiments can include various operations as set forth above, fewer operations, or more operations; or operations in an order. Accordingly, the scope of the invention is defined by the appended claims.

## Claims

1. An orthodontic appliance (10) comprising shells shaped to receive teeth, the shells being stacked and comprising:
two or more anchoring shells (14, 16); and
a mutable shell (18) located between the two or more anchoring shells (14, 16);
wherein the mutable shell (18) is configured to significantly decrease in elastic modulus by comprising a first polymer material that significantly decreases in elastic modulus by exposure of the orthodontic appliance (10) to an environmental condition, the first polymer material having a first glass transition temperature less than 90 degrees Celsius, and wherein the first polymer material comprises a thermoplastic polyurethane having a glass transition temperature of approximately 77 degrees Celsius, and can start softening at approximately 40 degrees Celsius;
wherein the two or more anchoring shells (14, 16) are configured to not significantly decrease in elastic modulus by comprising second polymer materials that do not significantly decrease in elastic modulus by exposure of the orthodontic appliance (10) to the environmental condition, the second polymer materials having a second glass transition temperature greater than the first glass transition temperature; and
wherein the environmental condition is heat at a temperature between 60 to 100 degrees Celsius and at or above the first glass transition temperature and sufficiently below the second glass transition temperature so as to soften the first polymer material without substantially softening the second polymer materials.

2. The orthodontic appliance (10) of claim 1, wherein the mutable shell (18) is configured to plastically soften by the first polymer material plastically softening when heating the orthodontic appliance (10), and wherein the two or more anchoring shells (14,16) are configured to remold the mutable shell (18) into a pre-softened state after heating the orthodontic appliance (10) ceases.

3. The orthodontic appliance (10) of claim 1, wherein the mutable shell (18) is configured to significantly increase in flexibility by the first polymer material significantly increasing in flexibility from exposure of the orthodontic appliance (10) to the environmental condition, and wherein the two or more anchoring shells (14,16) are configured to provide structural form to the mutable shell (18) by the first polymer material decreasing in flexibility after cessation of the orthodontic appliance (10) to the environmental condition.

4. The orthodontic appliance (10) of claim 1, wherein the orthodontic appliance (10) has a working flexural modulus that is sufficient to therapeutically move teeth, and wherein the first polymer material of the mutable shell (18) causes the orthodontic appliance (10) to have a transitory flexural modulus that is reduced from the working flexural modulus when the orthodontic appliance (10) is exposed to the environmental condition.

5. The orthodontic appliance (10) of claim 1, wherein the second glass transition temperature is approximately 150 degrees Celsius.

6. The orthodontic appliance (10) of claim 5, wherein the first polymer material comprises polycarbonate, and the second polymer materials comprise thermoplastic polyurethane.

7. The orthodontic appliance (10) of claim 1, wherein the first polymer material comprises polycarbonate, and the second polymer materials comprise thermoplastic polyurethane.

8. A method comprising:
obtaining an orthodontic appliance (10) according to claim 1;
exposing the orthodontic appliance (10) to the environmental condition to reduce the flexural modulus of the orthodontic appliance (10) and then briefly cooling the outer surfaces of the appliance before placing the appliance in the oral cavity to avoid burns.

9. The method of claim 8, wherein exposing the orthodontic appliance (10) to the environmental condition comprises warming the orthodontic appliance (10) to a temperature between 60 and 100 °C.

10. The method of claim 9, further comprising cooling surfaces of the orthodontic appliance (10) to a temperature less than 45 C.

11. The method of claim 8, wherein the orthodontic appliance (10) has a working flexural modulus that is sufficient to therapeutically move teeth, and wherein the first polymer material of the mutable shell (18) causes the orthodontic appliance (10) to have a transitory flexural modulus that is reduced from the working flexural modulus when the orthodontic appliance (10) is exposed to the environmental condition.

12. The method of claim 8, wherein the second glass transition temperature is approximately 150 degrees Celsius.

13. The method of claim 12, wherein the first polymer material comprises polycarbonate, and the second polymer materials comprise thermoplastic polyurethane.

14. The method of claim 8, wherein the first polymer material comprises polycarbonate, and the second polymer materials comprise thermoplastic polyurethane.

15. The method of claim 8, wherein the mutable shell (18) is configured to significantly increase in flexibility by the first polymer material significantly increasing in flexibility from exposure of the orthodontic appliance (10) to the environmental condition, and wherein the two or more anchoring shells (14,16) are configured to provide structural form to the mutable shell (18) by the first polymer material decreasing in flexibility after cessation of the orthodontic appliance (10) to the environmental condition.

## Patentansprüche

1. Orthodontische Vorrichtung (10), umfassend Schalen, die geformt sind, um Zähne aufzunehmen, wobei die Schalen gestapelt sind und folgendes umfassen:
zwei oder mehr Verankerungsschalen (14, 16); und
eine veränderbare Schale (18), die zwischen den zwei oder mehr Verankerungsschalen (14, 16) angeordnet ist;
wobei die veränderbare Schale (18) derart konfiguriert ist, dass der Elastizitätsmodul signifikant abnimmt, indem sie ein erstes Polymermaterial umfasst, dessen Elastizitätsmodul signifikant abnimmt, wenn die orthodontische Vorrichtung (10) einer Umgebungsbedingung ausgesetzt wird, wobei das erste Polymermaterial eine erste Glasübergangstemperatur von weniger als 90 Grad Celsius aufweist, und wobei das erste Polymermaterial ein thermoplastisches Polyurethan umfasst, das eine Glasübergangstemperatur von etwa 77 Grad Celsius aufweist und bei etwa 40 Grad Celsius beginnen kann, zu erweichen;
wobei die zwei oder mehr Verankerungsschalen (14, 16) derart konfiguriert sind, dass der Elastizitätsmodul nicht signifikant abnimmt, indem sie zweite Polymermaterialien umfassen, deren Elastizitätsmodul nicht signifikant abnimmt, wenn die orthodontische Vorrichtung (10) der Umgebungsbedingung ausgesetzt wird, wobei die zweiten Polymermaterialien eine zweite Glasübergangstemperatur aufweisen, die höher als die erste Glasübergangstemperatur ist; und
wobei die Umgebungsbedingung eine Erwärmung bei einer Temperatur zwischen 60 und 100 Grad Celsius und bei oder über der ersten Glasübergangstemperatur und ausreichend unter der zweiten Glasübergangstemperatur ist, um das erste Polymermaterial zu erweichen, ohne die zweiten Polymermaterialien wesentlich zu erweichen.

2. Orthodontische Vorrichtung (10) nach Anspruch 1, wobei die veränderbare Schale (18) dazu konfiguriert ist, plastisch zu erweichen, indem das erste Polymermaterial plastisch erweicht, wenn die orthodontische Vorrichtung (10) erwärmt wird, und wobei die zwei oder mehr Verankerungsschalen (14, 16) dazu konfiguriert sind, die veränderbare Schale (18) in einen vorerweichten Zustand umzuformen, nachdem das Erwärmen der orthodontischen Vorrichtung (10) aufhört.

3. Orthodontische Vorrichtung (10) nach Anspruch 1, wobei die veränderbare Schale (18) dazu konfiguriert ist, die Flexibilität signifikant zu erhöhen, indem das erste Polymermaterial die Flexibilität signifikant erhöht, wenn die orthodontische Vorrichtung (10) der Umgebungsbedingung ausgesetzt wird, und wobei die zwei oder mehr Verankerungsschalen (14, 16) dazu konfiguriert sind, der veränderbaren Schale (18) eine Strukturform zu verleihen, indem das erste Polymermaterial die Flexibilität verringert, nachdem die orthodontische Vorrichtung (10) der Umgebungsbedingung ausgesetzt wurde.

4. Orthodontische Vorrichtung (10) nach Anspruch 1, wobei die orthodontische Vorrichtung (10) einen Arbeitsbiegemodul aufweist, der ausreicht, um Zähne therapeutisch zu bewegen, und wobei das erste Polymermaterial der veränderbaren Schale (18) bewirkt, dass die orthodontische Vorrichtung (10) einen Übergangsbiegemodul aufweist, der gegenüber dem Arbeitsbiegemodul reduziert ist, wenn die orthodontische Vorrichtung (10) der Umgebungsbedingung ausgesetzt wird.

5. Orthodontische Vorrichtung (10) nach Anspruch 1, wobei die zweite Glasübergangstemperatur etwa 150 Grad Celsius beträgt.

6. Orthodontische Vorrichtung (10) nach Anspruch 5, wobei das erste Polymermaterial Polycarbonat umfasst und die zweiten Polymermaterialien thermoplastisches Polyurethan umfassen.

7. Orthodontische Vorrichtung (10) nach Anspruch 1, wobei das erste Polymermaterial Polycarbonat umfasst und die zweiten Polymermaterialien thermoplastisches Polyurethan umfassen.

8. Verfahren, umfassend:
Erhalten einer orthodontischen Vorrichtung (10) nach Anspruch 1;
Aussetzen der orthodontischen Vorrichtung (10) der Umgebungsbedingung, um den Biegemodul der orthodontischen Vorrichtung (10) zu reduzieren, gefolgt von einem kurzen Abkühlen der Außenflächen der Vorrichtung, bevor die Vorrichtung in der Mundhöhle platziert wird, um Verbrennungen zu vermeiden.

9. Verfahren nach Anspruch 8, wobei das Aussetzen der orthodontischen Vorrichtung (10) der Umgebungsbedingung ein Erwärmen der orthodontischen Vorrichtung (10) auf eine Temperatur zwischen 60 und 100 °C umfasst.

10. Verfahren nach Anspruch 9, ferner umfassend ein Abkühlen der Flächen der orthodontischen Vorrichtung (10) auf eine Temperatur von weniger als 45 °C.

11. Verfahren nach Anspruch 8, wobei die orthodontische Vorrichtung (10) einen Arbeitsbiegemodul aufweist, der ausreicht, um Zähne therapeutisch zu bewegen, und wobei das erste Polymermaterial der veränderbaren Schale (18) bewirkt, dass die orthodontische Vorrichtung (10) einen Übergangsbiegemodul aufweist, der gegenüber dem Arbeitsbiegemodul reduziert ist, wenn die orthodontische Vorrichtung (10) der Umgebungsbedingung ausgesetzt wird.

12. Verfahren nach Anspruch 8, wobei die zweite Glasübergangstemperatur ungefähr 150 Grad Celsius beträgt.

13. Verfahren nach Anspruch 12, wobei das erste Polymermaterial Polycarbonat umfasst und die zweiten Polymermaterialien thermoplastisches Polyurethan umfassen.

14. Verfahren nach Anspruch 8, wobei das erste Polymermaterial Polycarbonat umfasst und die zweiten Polymermaterialien thermoplastisches Polyurethan umfassen.

15. Verfahren nach Anspruch 8, wobei die veränderbare Schale (18) dazu konfiguriert ist, die Flexibilität signifikant zu erhöhen, indem das erste Polymermaterial die Flexibilität signifikant erhöht, wenn die orthodontische Vorrichtung (10) der Umgebungsbedingung ausgesetzt wird, und wobei die zwei oder mehr Verankerungsschalen (14, 16) dazu konfiguriert sind, der veränderbaren Schale (18) eine Strukturform zu verleihen, indem das erste Polymermaterial die Flexibilität verringert, nachdem die orthodontische Vorrichtung (10) der Umgebungsbedingung ausgesetzt wurde.

## Revendications

1. Appareil orthodontique (10) comprenant des coques formées pour recevoir des dents, les coques étant empilées et comprenant :
deux coques d'ancrage (14, 16) ou plus ; et
une coque mutable (18) située entre les deux coques d'ancrage (14, 16) ou plus ;
dans lequel la coque mutable (18) est configurée pour diminuer significativement son module élastique en comprenant un premier matériau polymère qui diminue significativement son module élastique par l'exposition de l'appareil orthodontique (10) à une condition environnementale, le premier matériau polymère ayant une première température de transition vitreuse inférieure à 90 degrés Celsius, et dans lequel le premier matériau polymère comprend un polyuréthane thermoplastique ayant une température de transition vitreuse d'environ 77 degrés Celsius, et peut commencer à ramollir à environ 40 degrés Celsius ;
dans lequel les deux coques d'ancrage (14, 16) ou plus sont configurées pour ne pas diminuer significativement leur module élastique en comprenant des seconds matériaux polymères qui ne diminuent pas significativement leur module élastique par l'exposition de l'appareil orthodontique (10) à la condition environnementale, les seconds matériaux polymères ayant une seconde température de transition vitreuse supérieure à la première température de transition vitreuse ; et
dans lequel la condition environnementale est de la chaleur à une température comprise entre 60 et 100 degrés Celsius et égale ou supérieure à la première température de transition vitreuse et suffisamment inférieure à la seconde température de transition vitreuse de sorte à ramollir le premier matériau polymère sans ramollir sensiblement les seconds matériaux polymères.

2. Appareil orthodontique (10) selon la revendication 1, dans lequel la coque mutable (18) est configurée pour se ramollir plastiquement sous l'effet du ramollissement plastique du premier matériau polymère lors du chauffage de l'appareil orthodontique (10), et dans lequel les deux coques d'ancrage (14, 16) ou plus sont configurées pour remodeler la coque mutable (18) dans un état préramolli après l'arrêt du chauffage de l'appareil orthodontique (10).

3. Appareil orthodontique (10) selon la revendication 1, dans lequel la coque mutable (18) est configurée pour augmenter significativement sa flexibilité par le premier matériau polymère qui augmente significativement sa flexibilité à partir de l'exposition de l'appareil orthodontique (10) à la condition environnementale, et dans lequel les deux coques d'ancrage (14, 16) ou plus sont configurées pour fournir une forme structurelle à la coque mutable (18) par le premier matériau polymère qui diminue sa flexibilité à l'arrêt de l'exposition de l'appareil orthodontique (10) à la condition environnementale.

4. Appareil orthodontique (10) selon la revendication 1, dans lequel l'appareil orthodontique (10) a un module de flexion de travail qui est suffisant pour déplacer les dents de manière thérapeutique, et dans lequel le premier matériau polymère de la coque mutable (18) amène l'appareil orthodontique (10) à avoir un module de flexion transitoire qui est réduit par rapport au module de flexion de travail lorsque l'appareil orthodontique (10) est exposé à la condition environnementale.

5. Appareil orthodontique (10) selon la revendication 1, dans lequel la seconde température de transition vitreuse est d'environ 150 degrés Celsius.

6. Appareil orthodontique (10) selon la revendication 5, dans lequel le premier matériau polymère comprend du polycarbonate, et les seconds matériaux polymères comprennent du polyuréthane thermoplastique.

7. Appareil orthodontique (10) selon la revendication 1, dans lequel le premier matériau polymère comprend du polycarbonate, et les seconds matériaux polymères comprennent du polyuréthane thermoplastique.

8. Procédé comprenant :
l'obtention d'un appareil orthodontique (10) selon la revendication 1 ;
l'exposition de l'appareil orthodontique (10) à la condition environnementale pour réduire le module de flexion de l'appareil orthodontique (10), puis le refroidissement bref des surfaces extérieures de l'appareil avant de placer l'appareil dans la cavité buccale afin d'éviter les brûlures.

9. Procédé selon la revendication 8, dans lequel l'exposition de l'appareil orthodontique (10) à la condition environnementale comprend le réchauffement de l'appareil orthodontique (10) à une température comprise entre 60 et 100 °C.

10. Procédé selon la revendication 9, comprenant en outre le refroidissement de surfaces de l'appareil orthodontique (10) à une température inférieure à 45 °C.

11. Procédé selon la revendication 8, dans lequel l'appareil orthodontique (10) a un module de flexion de travail qui est suffisant pour déplacer les dents de manière thérapeutique, et dans lequel le premier matériau polymère de la coque mutable (18) amène l'appareil orthodontique (10) à avoir un module de flexion transitoire qui est réduit par rapport au module de flexion de travail lorsque l'appareil orthodontique (10) est exposé à la condition environnementale.

12. Procédé selon la revendication 8, dans lequel la seconde température de transition vitreuse est d'environ 150 degrés Celsius.

13. Procédé selon la revendication 12, dans lequel le premier matériau polymère comprend du polycarbonate, et les seconds matériaux polymères comprennent du polyuréthane thermoplastique.

14. Procédé selon la revendication 8, dans lequel le premier matériau polymère comprend du polycarbonate, et les seconds matériaux polymères comprennent du polyuréthane thermoplastique.

15. Procédé selon la revendication 8, dans lequel la coque mutable (18) est configurée pour augmenter significativement sa flexibilité par le premier matériau polymère qui augmente significativement sa flexibilité à partir de l'exposition de l'appareil orthodontique (10) à la condition environnementale, et dans lequel les deux coques d'ancrage (14, 16) ou plus sont configurées pour fournir une forme structurelle à la coque mutable (18) par le premier matériau polymère qui diminue sa flexibilité à l'arrêt de l'exposition de l'appareil orthodontique (10) à la condition environnementale.
